# EUROPÄISCHE PATENTSCHRIFT

(11) **EP 3 228 416 B1**
(45) Veröffentlichungstag und Bekanntmachung des Hinweises auf die Patenterteilung: **06.05.2020**
(21) Anmeldenummer: 17162236.8
(22) Anmeldetag: 22.03.2017
(51) Int. Cl.: B23K 20/12, B23K 20/22, F16B 19/04, F16B 5/04, B21J 15/00, B23K 103/16, B23K 101/00

(54) **VERFAHREN UND VORRICHTUNG ZUM HERSTELLEN EINER HYBRIDVERBINDUNG SOWIE DAMIT HERGESTELLTES KAROSSERIEBAUTEIL**
METHOD AND DEVICE FOR PRODUCING A HYBRID CONNECTION AND BODY COMPONENT PRODUCED THEREOF
PROCÉDÉ ET DISPOSITIF DE FABRICATION D'UNE CONNEXION HYBRIDE ET PIÈCE DE CARROSSERIE CORRESPONDANTE

(30) Priorität: 08.04.2016 DE 102016205924
(43) Veröffentlichungstag der Anmeldung: 11.10.2017
(73) Patentinhaber: Ford Global Technologies, LLC, Dearborn, MI 48126 (US)
(72) Erfinder: Memili, Selahattin Türel, 47169 Duisburg (DE)
(74) Vertreter: Dörfler, Thomas

(56) Entgegenhaltungen:
- EP-A1- 2 585 247
- WO-A2-2015/106244
- DE-A1-102011 114 306
- DE-A1-102014 011 599
- US-A2- 2003 218 053
- Thyssenkrupp: "EINSATZPOTENZIAL VON LITECOR IN DER KAROSSERIE", ATZ extra, 31. Oktober 2014 (2014-10-31), Seiten 108-111, XP055399938, Gefunden im Internet: URL:https://incarplus.thyssenkrupp.com/nav igator_atz_pdf/ATZ_InCar_plus_Karosserie_P otenzialanalyse_LITECOR.pdf [gefunden am 2017-08-21]

## Beschreibung

Die Erfindung betrifft ein Verfahren zum Herstellen einer Verbindung zwischen einem Sandwichelement und einem Metallelement und ein derart hergestelltes Karosseriebauteil (siehe, z.B. Artikel "Einsatzpotential von Litecor in der Karosserie" in der ATZ extra vom Oktober 2014, Seiten 108-111). Die Erfindung betrifft aber auch eine Vorrichtung die zum Herstellen der Verbindung zwischen einem Sandwichelement und einem Metallelement eingerichtet ist (siehe, z.B., DE 10 2011 114 306 A1).

Derartige Sandwichelemente sind z.B. unter der Markenbezeichnung LITECOR® bekannt, und weisen einen Kunststoffkern auf, der von zwei Metalldeckblechen ummantelt wird. Das Sandwichelement ist also im Vergleich zu Vollstahlblechen gewichtsreduziert, aber auch sehr biege- und beulsteif. Solche Verbundwerkstoffe sind in der Fahrzeugindustrie zum Beispiel im Karosseriebereich als flächige Bauteile, wie zum Beispiel als Dach, Tür, Heckklappe oder Motorhaube einsetzbar und zeigen den Weg zu leistungsfähigen, und im Vergleich zu Metallelementen aus Stahl oder Leichtmetallen wie z.B. Aluminium oder Magnesium, weiter gewichtsreduzierten und kostenreduzierten Komponenten.

Metallelemente im Sinne der Erfindung sind Stahlbleche oder Leichtmetallbleche wie z.B. Aluminiumbleche oder Magnesiumbleche.

Eine Baugruppe einer Kraftfahrzeugkarosserie mit einem Blechbauteil, das mit einem flächig daran angebrachten Verstärkungsbauteil aus einem Faserverbundwerkstoff verstärkt ist, ist in der DE 10 2012 203 888 A1 offenbart. Solche Hybridbauteile können nicht mit im Karosseriebau üblichen Fügeverfahren, wie z.B. Punktschweißen mit anderen Bauteilen im Bereich des Verstärkungsbauteils verbunden werden, wie die DE 10 2012 203 888 A1 problematisiert. Von daher schlägt die DE 10 2012 203 888 A1 vor, dass das Verstärkungsbauteil zumindest eine Ausnehmung aufweist, so dass das Blechbauteil im Bereich der Ausnehmung mit einem konventionellen Fügeverfahren mit einem anderen Blechbauteil verbindbar sei. Das Blechbauteil ist ein Verstärkungsblech eines Seitenschwellers. Das Verstärkungsbauteil besteht aus einem kohlefaserverstärkten Kunststoff, wobei das Blechbauteil aus einem schweißbaren Eisenwerkstoff besteht.

Aus der EP 2 689 882 A2 ist eine Vorrichtung und ein Verfahren des Reibrührschweißens offenbart. Dabei werden zwei unterschiedliche Metallbleche, also ein Aluminiumblech und ein Stahlblech miteinander verbunden. Um einen Verbindungskrater zu schließen, wird ein Füllermaterial eingesetzt.

Auch in der US 2010/0089977 A1 ist das Reibrührschweißen unterschiedlicher Materialien thematisiert. Dabei wird ein Aluminiumblech mit einem Magnesiumblech verbunden, wobei Kombinationen aus Kupfer, Zinn und Zink und anderen Pulvern das magnesiumhaltige und aluminiumhaltige Reibrührschweißmaterial festigen könnten.

Im Kraftfahrzeugbau, insbesondere bezüglich der Karosserie ist es von Vorteil, wenn diese besonders leicht ist. Dies spart Kraftstoff, und reduziert so auch die Emission schädlicher Gase, wie z.B. CO₂. In unterschiedlichen Bereichen sind die Struktur-, also Karosseriebauteile an unterschiedlichste Belastungen auszulegen. Dabei müssen die Bauteile auch so hergestellt werden, dass bei möglichst wenig Materialverlust das höchste Leichtbaupotential erreichbar ist. In Bereichen, welche besonders hohen Belastungen ausgesetzt sind, können daher auch Verstärkungsmaßnahmen vorgesehen werden. Beispielsweise können die Bauteile aus einem Grundelement gebildet sein, und abschnittsweise Verdickungen als Verstärkungsmaßnahmen aufweisen. So genannte "tailored rolled blanks" sind bekannt. Tailored rolled blanks sind aber in der Herstellung sehr kompliziert, und insofern auch sehr kostenintensiv. Nachteilig ist auch, dass bei einem einzigen, auch geringen Walzfehler das gesamte Bauteil entsorgt werden muss, da dieses den Anforderungen dann nicht mehr entspricht. Denkbar ist aber auch, wenn an dem Grundelement separate Verstärkungselemente vorgesehen sind, welche aus faserverstärktem Kunststoff bestehen können. Wie bereits in der DE 10 2012 203 888 A1 offenbart, sind herkömmliche Fügeverfahren ungeeignet. Verstärkungselemente können mittels Klebverbindungen mit dem Grundelement verbunden werden, und dieses so verstärken, dass die zu erwartenden Belastungen von dem Karosseriebauteil aufgenommen werden können. Mit Klebverbindungen ist allerdings nicht die höchstmögliche Verbindungsleistung erreichbar. Insofern werden noch mechanische Zusatzverbindungen notwendig, welche aber die Fasern des faserverstärkten Kunststoffs zerstören können, so dass die angestrebte Verstärkung hinfällig ist. Beispielsweise können Verstärkungselemente mit Nieten an dem Grundelement befestigt werden, welche die Fasern im Verbindungsbereich zwangsläufig zerstören. Zudem können Scher- und Risskräfte der ur- sprünglichen Verbindung reduziert werden, wobei auch Korrosionsprobleme auftreten können.

In dem Artikel "Friction spot joining of aluminum AA6181-T4 and carbon fiberreinforced poly(phenylene sulfide): Effects of process parameters on the microstructure and mechanical strength" (material and design 66 (2015), 437 - 445) ist eine mögliche Verbindung eines Aluminiumblechs mit einem faserverstärkten Kunststoff thematisiert, wobei auf die EP 2 329 905 B1 Bezug genommen wird.

In der EP 2 329 905 B1 ist ein wiederauffüllendes Reibrührschweißverfahren offenbart, bei welchem ein Leichtmetallblech mit einen faserverstärkten Kunststoff verbunden wird. Die Reibrührschweißvorrichtung weist einen Stift, eine Hülse und einen Klemmring auf. Mit dieser Vorrichtung sei es möglich, den Reibschweißkrater mit der Reibrührschweißvorrichtung im Zuge des Schweißverfahrens zu verschließen, wobei der faserverstärkte Kunststoff zwar aufgeschmolzen wird, die Fasern jedoch unbeschädigt bleiben sollen. Nach dem die Rotation gestoppt ist, erhärten die Materialien, so dass die ehemals aufgeschmolzenen Bereiche aneinander haften. Dabei wird jedoch explizit der Hinweis gegeben, dass die bekannten Klebverbindungsnachteile ausgeschlossen sind, da auf einen separaten Klebstoff verzichtet wird.

Aus der DE 10 2011 114 306 A1 ist Verfahren und eine Vorrichtung zum Fügen von wenigstens zwei in einem Fügebereich aufeinanderliegenden faserverstärkten Kunststoff-Bauteilen mittels eines metallenen Fügeelements bekannt. Dabei wird zur Fixierung der aufeinanderliegenden Bauteile im Fügebereich ein Setzbolzen als Fügeelement zunächst durch die faserverstärkten Kunststoff-Bauteile und anschließend durch ein im Fügebereich anliegendes Metallblech getrieben. Anschließend wird mittels Reibungsschweißen eine stoffschlüssige Verbindung zwischen Setzbolzen und Metallblech hergestellt.

Die eingangs genannten Sandwichelemente (LITECOR ®) eignen sich für den Einsatz als flächige Bauteile wie z.B. Türen, Dach, Heckklappe oder Motorhaube. Diese Bauteile sind üblicherweise mit anderen Bauteilen, wie z.B. Scharnieren oder Auflagerelementen verschraubt.

Der Erfindung liegt die Aufgabe zugrunde, ein Verfahren zum Verbinden eines Sandwichelementes mit einem Metallelement anzugeben, so dass ein Bauteil, insbesondere ein Kraftfahrzeugbauteil herstellbar ist, welches trotz reduziertem Herstellungsaufwand bei einer größtmöglichen Gewichtsbetrachtung die erforderlichen Steifigkeits-und/oder Crasherfordernisse erfüllt. Der Erfindung liegt aber auch die Aufgabe zugrunde, eine Vorrichtung anzugeben, die zur Durchführung des Verfahrens geeignet ist.

Erfindungsgemäß wird die Aufgabe durch ein Verfahren mit den Merkmalen des Anspruchs 1 gelöst. Die vorrichtungstechnische Aufgabe wird durch eine Vorrichtung mit den Merkmalen des Anspruchs 8 gelöst. Die Unteransprüche geben jeweils vorteilhafte Ausführungsformen an.

Erfindungsgemäß wird ein Verfahren zum Herstellen einer Verbindung zwischen einem Sandwichelement und einem Metallelement aufgezeigt, wobei das Sandwichelement eine zwischen zwei Deckelementen angeordnete, artfremde Zwischenschicht aufweist. Das erfindungsgemäße Verfahren umfasst zumindest die folgenden Schritte:
Bereitstellen des Sandwichelementes und des Metallelementes;
Übereinanderlegen des Sandwichelementes und des Metallelementes so, dass diese zumindest bereichsweise überlappen;
Beigeben eines zusätzlichen Materialkörpers von der Sandwichelementseite her, wobei der zusätzliche Materialkörper mit seinem Grundkörper vollständig in dem Sandwichelement aufgenommen ist, und
Durchführen eines wiederauffüllenden Reibrührschweißprozesses von der dazu gegenüberliegenden Metallelementseite, so dass eine Hybridverbindung gebildet ist, welche eine mechanische Verbindung des zusätzlichen Materialkörpers zum Sandwichelement und eine stoffschlüssige Verbindung des zusätzlichen Materialkörpers zum Metallelement aufweist.

Das Metallelement im Sinne der Erfindung ist ein Stahlblech oder Leichtmetallblech, wie z.B. ein Aluminiumblech oder ein Magnesiumblech. Das Sandwichelement im Sinne der Erfindung weist eine zwischen zwei bevorzugt artgleichen Deckelementen angeordnete, artfremde Zwischenschicht auf. Die Deckelemente können Stahlbleche oder Leichtmetallbleche, wie z.B. Aluminiumbleche oder Magnesiumbleche sein, wobei die einander gegenüber liegenden Deckelemente auch aus jeweils unterschiedlichen Werkstoffen bestehen können. Die artfremde Zwischenschicht kann ein Kunststoff, z.B. ein Polymer sein. Ein Sandwichelement im Sinne der Erfindung kann auch ein Kohlenstofffaserverstärkter Kunststoff (CFK) sein. Mit der Erfindung können Kraftfahrzeugbauteile, wie z.B. A-, B-, C- oder D-Säulen aber auch andere Strukturelemente der Karoserie, wie z.B. Schweller, also Bauteile der gesamten Karosserie hergestellt werden. Diese gemäß der Erfindung hergestellten Bauteile sind bezogen auf Stahl oder Leichtmetalle kostengünstiger und bieten zudem Gewichtsvorteile. So kann das Metallelement als Grundelement angesehene werden, welches von dem Sandwichelement verstärkt wird, so dass das Sandwichelement als Verstärkungselement angesehen werden kann.

Wesentlich ist bei der Erfindung, dass das wiederauffüllende Reibrührschweißen (RRSSW = Refill Friction Stir Spot Welding oder RFSEW = Refill Friction Stir Element Welding) von der zum Sandwichelement gegenüber liegenden Metallelementseite erfolgt. So ist eine thermische Beeinflussung des Sandwichmaterials trotz der hohen Reibungswärme auf der Metallelementseite vernachlässigbar. Denn es wird lediglich das Metallelement und der zusätzliche Materialkörper bereichsweise plastifiziert. So entsteht aber eine stoffschlüssige Verbindung des zusätzlichen Materialkörpers zum Metallelement, wobei der zusätzliche Materialkörper lagesicher in dem Sandwichelement aufgenommen ist. Der nicht plastifizierte Teil des zusätzlichen Materialkörpers verbleibt in seinem ursprünglich festen Zustand.

Damit der zusätzliche Materialkörper lagesicher in dem Sandwichelement aufgenommen werden kann, kann dieser als Niet ausgeführt sein. Idealer Weise kann also zunächst eine mechanische Verbindung, also eine Nietverbindung zwischen dem Sandwichelement und dem Metallelement hergestellt werden. Auf die dazu eingerichtete Vorrichtung wird später noch eingegangen. Der Niet wird von der Sandwichelementseite her, das Sandwichelement durchstoßend mit seiner Kopfseite in das Metallelement eingetrieben. Dabei greift der Niet mit seinem Kopfbereich in das Metallelement ein, durchstößt dieses aber nicht. Zielführend wird also zunächst eine mechanische Verbindung, also eine Nietverbindung zwischen dem Sandwichelement und dem Metallelement erzeugt. Der zusätzliche Materialkörper kann an seinem Grundkörper noch eine Art Außengewinde aufweisen, so dass die mechanische Verbindung weiter gesichert ist.

Zielführend ist, wenn das Sandwichelement so zu dem Metallelement positioniert wird, dass das Sandwichelement, also der Überlappungsbereich zwischen dem zusätzlichen Materialkörper und dem Metallelement angeordnet ist.

Der zusätzliche Materialkörper weist den zylindrischen Grundkörper auf und kann an seinem Kopfbereich spitz konusförmig ausgeführt sein. Der zusätzliche Materialkörper kann an seinem Kopfbereich aber auch U-Förmig oder eben ausgeführt sein. Natürlich sollen die genannten Ausführungen des Kopfbereiches nicht einschränkend sein.

Gegenüberliegend zum Kopfbereich weist der zusätzliche Materialkörper eine Erweiterung des ansonsten zylindrischen Grundkörpers auf. Die Erweiterung kann auch als Anlageflansch bezeichnet werden, die sich an die freie Fläche des Sandwichelementes anlegt, und so quasi eine Eintreibsicherung bildet und ein zu tiefes Eindringen in das Metallelement verhindert. Der Anlageflansch kann in Umfangsrichtung gesehen unterbrochen sein, und muss also in Umfangsrichtung gesehen nicht durchgehend ausgeführt sein.

In einer weiter idealen Ausgestaltung der Erfindung kann in dem Sandwichelement ein Vorloch eingebracht werden, in welches der zusätzliche Materialkörper eingebracht wird. Das Vorloch erstreckt sich dabei vollständig von der freien Fläche ausgehend durch das gesamte Sandwichelement. Der zusätzliche Materialkörper weist einen zylindrischen Grundkörper mit einem bevorzugt ebenen Kopfbereich und einem dazu gegenüberliegenden Fußbereich auf, an dem optional ein Anlageflansch vorgesehen werden kann. Der zylindrische Grundkörper weist bis zum Kopfbereich eine Längserstreckung auf, welche der Längserstreckung des Vorlochs, also der Materialdicke des Sandwichelementes entspricht. Lediglich der an dem Fußbereich optional angeordnete Anlageflansch überragt das Vorloch, also die freie Oberfläche des Sandwichelementes. Das Vorloch kann im lichten Durchmesser kleiner ausgeführt sein, als der Außendurchmesser des zylindrischen Grundkörpers, so dass der zusätzliche Materialkörper quasi im Presssitz in das Vorloch einbringbar ist. Da der zusätzliche Materialkörper an die Materialdicke des Sandwichelementes angepasst ist, kommt dessen Kopfbereich direkt an der korrespondierenden Oberfläche des Metallelementes zu Anlage. Ersichtlich ist, dass so auf einen Anlageflansch verzichtet werden kann. Dieser kann dennoch vorgesehen werden, um ein zu tiefes eintreiben des zusätzlichen Materialkörpers von der Sandwichelementseite aus in das Metallelement hinein sicher vermeiden zu können. Mit diesem Vorgehen wird auf eine zunächst zu erstellende mechanische Verbindung zum Metallelement verzichtet, wobei der zusätzliche Materialkörper jedoch, wie auch schon zuvor Beschrieben, lagesicher in dem Sandwichelement aufgenommen ist. Es kann auch eine Schraubverbindung mittels korrespondierender Gewinde, also Innengewinde im Vorloch und Außengewinde an dem zylindrischen Grundkörper vorgesehen werden.

Der zusätzliche Materialkörper kann eine im Querschnitt gesehen ausgeführte Breite haben, welche der bevorzugten wiederrauffüllenden Reibrührschweißvorrichtung, also dem Außendurchmesser seiner Hülse entspricht. Möglich ist auch, wenn der zusätzliche Materialkörper breiter ausgeführt ist, so dass dessen äußerer Durchmesser die Hülse überragt.

Ist der zusätzliche Materialkörper von der Sandwichelementseite her zugegeben, wird die stoffschlüssige Verbindung mittels des wiederauffüllenden Reibrührschweißens (RFSSW oder RFSEW) von der Metallelementseite ausgehend hergestellt.

Zielführend ist, wenn der zusätzliche Materialkörper aus einem zum Metallelement artgleichen Werkstoff gebildet ist. Insofern kann der zusätzliche Materialkörper beispielsweise aus einem Stahl oder Leichtmetall, wie z.B. Aluminium oder Magnesium bestehen. So kann eine artgleiche Schweißverbindung hergestellt werden.

Es werden entsprechend der vorgesehenen Anzahl der zusätzlichen Materialkörper entsprechende Ansatzpunkte der Reibrührschweißvorrichtung vorgesehen. Auf die Reibrührschweißvorrichtung wird weiter unten noch eingegangen. Die formschlüssigen Verbindungsbereiche sind dabei bevorzugt ähnlich wie bei Punktschweißverbindungen zueinander beabstandet. An einer aktiven Seite des Metallelements, also an der Seite, an welcher die Reibrührschweißvorrichtung mit dem Reibrührschweißkopf angreift ist das Metallelement nach dem Zusammenfügen krater- und/oder erhebungsfrei im Wesentlichen eben ausgeführt (RFSSW oder RFSEW).

Idealer Weise wird der Reibrührschweißvorgang direkt gegenüberliegend zum zusätzlichen Materialkörper von der Metallelementseite aus durchgeführt. Die Reibrührschweißvorrichtung weist einen nicht-rotierbaren äußeren Klemmring, eine rotierbare Hülse und einen rotierbaren Stift auf. Mittels der rotierbaren Elemente, insbesondere mit der rotierbaren Hülse wird eine Rührzone erzeugt, also auch eine Vermischungszone zwischen dem zusätzlichen Materialkörper, idealer Weise lediglich seines Kopfbereiches mit dem Metallelement erzeugt. So wird das Metallelement aber auch der zusätzliche Materialkörper durch die entstehende Reibwärme plastifiziert. Von dem zusätzlichen Materialkörper wird zielführend lediglich der Kopfbereich plastifiziert, also nicht der gesamte zusätzliche Materialkörper. Dies ist günstig, da so der thermische Einfluss des Reibschweißens, also die entstehende Reibungswärme bezüglich des Sandwichelementes vernachlässigbar ist. Dieser Effekt wird noch weiter begünstigt, wenn der zusätzliche Materialkörper im Querschnitt gesehen breiter ist als die rotierbare Hülse der Reibrührschweißvorrichtung.

Zweckmäßig ist, wenn bei dem Reibrührschweißvorgang die Rührzone durch das Metallelement hindurch bis in den Kopfbereich des zusätzlichen Materialkörpers geführt wird.

Ist der zusätzliche Materialkörper als Niet mit seinem Kopfbereich in dem Metallelement aufgenommen, ist es zielführend, wenn lediglich der in dem Metallelement aufgenommen Kopfbereich plastifiziert wird. Ist der Kopfbereich spitz konusförmig, wird der Kopfbereich quasi eingeebnet. Ist der Kopfbereich U-Förmig ausgeführt, werden lediglich die U-Schenkel plastifiziert. Jedoch ist die stoffschlüssige Fügeebene des zusätzlichen Materialkörpers zum Metallelement im Bereich des Metallelementes angeordnet.

Ist der zusätzliche Materialkörper ohne mit seinem Kopfbereich in das Metallelement einzudringen in dem zuvor erstellten Vorloch aufgenommen, wird die Rührzone durch das Metallelement hindurch in den Kopfbereich des zusätzlichen Materialkörpers geführt. Dabei wird jedoch wiederum nicht der gesamte zusätzliche Materialkörper plastifiziert, sondern nur dessen Kopfbereich. Dabei ist die stoffschlüssige Fügeebene des zusätzlichen Materialkörpers zum Metallelement im Bereich des Sandwichelementes angeordnet.

Günstiger Weise ist die Rührzone dabei im Querschnitt gesehen bevorzugt kleiner als die Breite des zusätzlichen Materialkörpers. Dies wurde oben bereits bezüglich des Außendurchmessers der Hülse welcher geringer ist als die Breite des zusätzlichen Materialkörpers erwähnt. So verbleibt ein äußerer, ringförmiger Bereich des zusätzlichen Materialkörpers, welcher nicht plastifiziert wird. Zielführend ist, wenn dieser ringförmige Bereich in seinen Abmessungen der zu erwartenden Wärmeeinflusszone um die Rührzone herum entspricht. Indem die Rührzone so vorteilhaft nicht nur in der Breite sondern auch in der Tiefe auf einen Teilkopfbereich des zusätzlichen Material körper begrenzt ist, wird der Wärmeeintrag in das Sandwichelement vernachlässigbar, da die Wärmeeinflusszone auf das Metallelement und den zusätzlichen Materialkörper begrenzt ist. Jedoch taucht die Reibschweißvorrichtung mit ihren rotierbaren Elementen in den Kopfbereich des zusätzlichen Materialkörpers ein, so dass die Rührzone in den Kopfbereich geführt ist. So wird eine stoffschlüssige Fügeebene des Metallelementes zum zusätzlichen Materialkörper erzeugt, welche im Bereich des Sandwichelementes angeordnet ist.

Mit den beschriebenen Vorgehensweisen ist eine stoffschlüssige Verbindung des Metallelements zum zusätzlichen Materialkörper erzeugt. Die beiden Elemente werden quasi miteinander verschweißt. Dadurch dass der zusätzliche Materialkörper entweder als Niet von dem Sandwichelement aus eingebracht ist, oder als zylindrischer Körper in einem Vorloch des Sandwichelementes lagesicher aufgenommen oder z.B. eingepresst ist (Presspassung), liegt also eine Hybridverbindung vor, die eine mechanische Verbindung und eine stoffschlüssige Verbindung aufweist. So wird eine Verbindung erzeugt, welche eine höchste Verbindungsgüte nicht nur hinsichtlich auftretender Scheer- und Rissbeanspruchungen hat. So können auch Strukturbauteile wesentlich flexibler gestaltet werden.

Der vorrichtungstechnische Teil der Aufgabe wird durch eine Vorrichtung mit den Merkmalen des Anspruchs 8 gelöst. Die erfindungsgemäße Vorrichtung ist zur Durchführung des zuvor beschriebenen Verfahrens zur Verbindung eines Sandwichelementes mit einem Metallelemente eingerichtet, und weist eine wiederauffüllende Reibrührschweißvorrichtung auf. Im Folgenden wird der Einfachheit wegen der Begriff Reibschweißvorrichtung genannt. Zielführend ist vorgesehen, dass die Reibschweißvorrichtung an einem Ende eines Tragarms angeordnet ist, an dessen gegenüberliegenden Ende zumindest eine Halte- und Zuführvorrichtung für zumindest einen zusätzlichen Materialkörper angeordnet ist.

So kann von einer Seite, nämlich von der Sandwichelementseite aus der zusätzliche Materialkörper zugeführt werden, wobei von der dazu gegenüber liegenden Seite, also von der Metallelementseite die Reibschweißvorrichtung angreifen kann, so dass der wiederauffüllende Reibrührschweißprozess durchgeführt werden kann.

Günstig ist, wenn der Tragarm C-förmig ausgeführt ist, so dass die Zuführ- und Haltevorrichtung und die Reibschweißvorrichtung einander gegenüber angeordnet sind.

Zweckmäßig ist, wenn die Zuführ- und Haltevorrichtung ein Förderelement aufweist, mit dem eine mechanische Verbindung herstellbar ist. Die mechanische Verbindung kann eine Nietverbindung oder eine Presspassung sein, wobei auch eine zusätzliche Schraubverbindung denkbar ist. Für eine Nietverbindung ist der zusätzliche Materialkörper als Niet ausgeführt, welcher von dem Förderelement der Zuführ- und Haltevorrichtung das Sandwichelement durchstoßend mit seinem Kopfbereich in das Metallelement eingetrieben wird. Für eine Presspassung wird zunächst ein Vorloch in das Sandwichelement eingebracht, in welches der zusätzliche Materialkörper eingepresst wird. Dazu kann das Förderelement genutzt werden, wobei dessen Leistung reduziert sein kann, oder die Zuführ- und Haltevorrichtung ist mit einer entsprechenden Leistung ausgeführt, so dass auf das Förderelement verzichtet werden kann. Wie zuvor erwähnt können auch korrespondierende Gewinde vorgesehen werden, oder nur der zusätzliche Materialkörper weist eine Art Außengewinde, also quasi Eingriffzähne auf, welche die gewählte mechanische Verbindung weiter verstärken.

Günstig ist, dass sowohl die Reibschweißvorrichtung als auch die Zuführ- und Haltevorrichtung relativ zum Tragarm, also relativ zu dem jeweiligen Ende an dem die betreffenden Vorrichtungen angeordnet sind aus einer Ruheposition in eine Arbeitsposition und zurück bewegbar sind. In der Ruheposition sind die beiden Vorrichtung so zueinander beabstandet, dass die einander zumindest überlappenden Elemente, also das Sandwichelement und das Metallelement in einen Zwischenraum bringbar ist. Aus der Ruheposition sind die beiden Vorrichtungen bevorzugt gleichzeitig in die Arbeitsposition überführbar. In dieser stehen beide Vorrichtung in Kontakt mit den jeweiligen Oberflächen des betreffenden Elementes. Die Reibschweißvorrichtung steht also in Kontakt mit der freien Oberfläche des Metallelementes. Die Zuführ- und Haltevorrichtung steht in Kontakt mit der freien Oberfläche des Sandwichelementes. Beide Vorrichtungen sind einander gegenüberliegend angeordnet. Ist der zusätzliche Materialkörper in dem Sandwichelement aufgenommen, also zugeführt, beginnt der wiederauffüllende Reibrührschweißprozess, wobei die Zuführ- und Haltevorrichtung die Haltefunktion übernimmt. Dabei kann auch der zusätzliche Materialkörper zusätzlich gehalten werden, wobei auch ein Andrücken des Sandwichelementes an das Metallelement möglich ist. Bei dem wiederauffüllenden Reibrührschweißprozess wird die Hülse zunächst zusammen mit dem Stift unter Rotation in das Metallelement eingetaucht, wodurch das Material entsprechend plastifiziert wird. Ist der zusätzliche Materialkörper ein Niet, welcher mit seinem Kopfbereich innerhalb des Metallelementes angeordnet ist, wird so der Kopfbereich durch die entstehende Wärme ebenfalls plastifiziert. Liegt der zusätzliche Materialkörper mit seinem Kopfbereich an der korrespondierenden Oberfläche des Metallelementes an, taucht die Hülse rotierend in den Kopfbereich des zusätzlichen Materialkörpers ein, und plastifiziert so das Metallelement als auch den betrefflichen Kopfbereichabschnitt. So entsteht jeweils die stoffschlüssige Fügeebene des Metallelementes zum zusätzlichen Materialkörper innerhalb des Sandwichelementes oder innerhalb des Metallelementes. Ab einer gewissen Eintauchtiefe wird der Stift entgegengesetzt zur Eintauchbewegung der Hülse bewegt, also quasi zurückgezogen. Gleichzeitig mit Zurückziehen der rotierbaren Hülse in ihre Ausgangsposition wird der rotierbare Stift wiederum entgegengesetzt in Richtung zur freien Oberfläche des Metallelementes geführt, so dass die freie Oberfläche nach dem widerauffüllenden Reibrührschweißprozess kraterfrei und eben ist. Die Reibschweißvorrichtung aber auch die Zuführ-und Haltevorrichtung wird in ihre jeweilige Ruheposition überführt. Es können nun weitere Verbindungen erstellt werden, oder die einander verbundenen Elemente (Sandwichelement/Metallelement), also das gebildete Bauteil, insbesondere ein Strukturbauteil eines Kraftfahrzeuges wird aus der Vorrichtung entnommen wenn die notwendigen Verbindungen erstellt sind.

Weitere vorteilhafte Einzelheiten und Wirkungen der Erfindung sind im Folgenden anhand von in den Figuren dargestellten Ausführungsbeispielen näher erläutert. Es zeigen
- Fig. 1: einen Querschnitt einer Vorrichtung zur Verbindung eines Sandwichelementes mit einem Metallelement in einer Ruheposition,
- Fig. 2 bis Fig. 5: die Vorrichtung aus Figur 1 mit aufeinanderfolgenden Schritten,
- Fig. 6: das erfindungsgemäße Verfahren in aufeinander folgenden Schritten in einer ersten Ausgestaltungsvariante,
- Fig. 7: das erfindungsgemäße Verfahren in aufeinander folgenden Schritten in einer zweiten Ausgestaltungsvariante,
- Fig. 8: das erfindungsgemäße Verfahren in aufeinander folgenden Schritten in einer dritten Ausgestaltungsvariante,
- Fig. 9: das erfindungsgemäße Verfahren in aufeinander folgenden Schritten in einer vierten Ausgestaltungsvariante,
- Fig. 10: einen Querschnitt durch zwei verbundene Elemente als Einzelheit zu dem Ausführungsbeispiel nach Figur 9.

In den unterschiedlichen Figuren sind gleiche Teile stets mit denselben Bezugszeichen versehen, weswegen diese in der Regel auch nur einmal beschrieben werden.

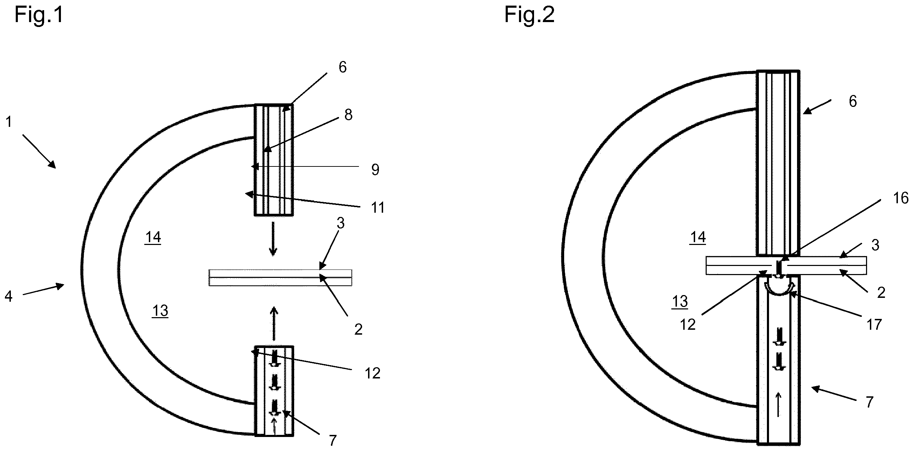

Figur 1 zeigt eine Vorrichtung 1 welche zur Verbindung eines Sandwichelementes 2 mit einem Metallelement 3 eingerichtet ist.

Das Sandwichelement 2 weist eine zwischen zwei bevorzugt artgleichen Deckelementen angeordnete, artfremde Zwischenschicht auf. Die Deckelemente können aus einem Stahlblech oder aus einem Leichtmetallblech, wie z.B. aus einem Aluminiumblech oder Magnesiumblech gebildet sein. Die artfremde Zwischenschicht kann ein Kunststoff, beispielsweise ein Polymer sein. Das Metallelement 3 kann ein Stahlblech oder ein Leichtmetallblech, wie zum Beispiel ein Aluminiumblech oder ein Magnesiumblech sein.

Die Vorrichtung 1 weist einen Tragarm 4 auf, der beispielhaft C-Förmig ausgeführt ist. An einem seiner Enden weist der Tragarm 4 eine wiederauffüllende Reibrührschweißvorrichtung 6 auf. An dem dazu gegenüberliegenden Ende des Tragarms 4 ist eine Zuführ- und Haltevorrichtung 7 angeordnet.

Die wiederauffüllende Reibrührschweißvorrichtung 6 weist einen äußere Klemmring 8, eine rotierbare Hülse 9 und einen rotierbaren Stift 11 auf.

Zumindest ein zusätzlicher Materialkörper 12, bevorzugt mehrere zusätzliche Materialkörper 12 sind in der Zuführ- und Haltevorrichtung 7 erkennbar. Die zusätzlichen Materialkörper 12 können magazinartig zugeführt werden. Die Zuführ-und Haltevorrichtung 7 kann ein Förderelement aufweisen. Mit dem Förderelement kann eine Nietverbindung hergestellt werden. Dazu ist der zusätzliche Materialkörper 12 bei dem Ausführungsbeispiel nach Figur 1 als Niet ausgeführt.

Wie in Figur 1 erkennbar, ist die Zuführ- und Haltevorrichtung 7 an der Sandwichelementseite 13 angeordnet, wobei die wiederauffüllende Reibrührschweißvorrichtung 6 an der Metallelementseite 14 angeordnet ist.

Das Sandwichelement 2 und das Metallelement 3 sind so aufeinander gelegt, dass zumindest eine Überlappung gebildet ist, in welcher die gewünschte Verbindung herstellbar ist. In Figur 1 sind sowohl die wiederauffüllende Reibrührschweißvorrichtung 6 als auch die Zuführ- und Haltevorrichtung 7 in ihrer jeweiligen Ruheposition an dem Tragarm 4 angeordnet.

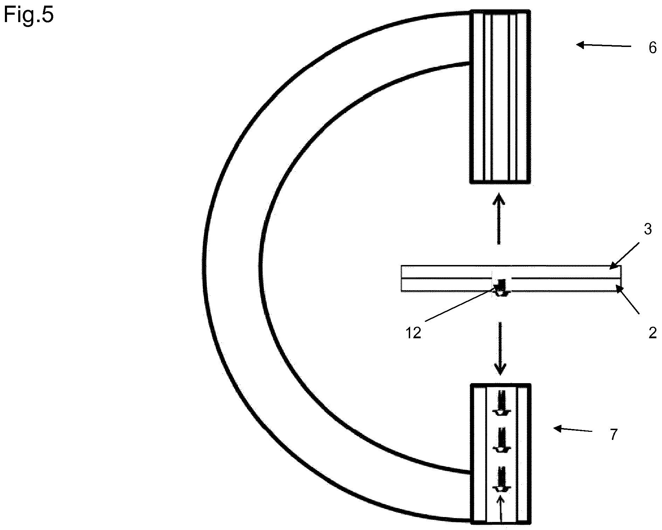

Beide Vorrichtungen 6 und 7 sind relativ zu dem Tragarm 4 aus der Ruheposition in eine Arbeitsposition überführbar, die in den Figuren 2 bis 4 erkennbar ist. In Figur 5 sind beide Vorrichtungen 6 und 7 wiederum in der Ruheposition.

Bei dem In Figur 2 dargestellten Verbindungsschritt sind sowohl die wiederauffüllende Reibrührschweißvorrichtung 6 als auch die Zuführ- und Haltevorrichtung 7 auf die jeweils freie Oberfläche des jeweiligen Elementes 2 oder 3 aufgelegt. Der zusätzliche Materialkörper 6 wird als Niet mit seinem zylindrischen Grundkörper durch das Sandwichelement 2 hindurch in Richtung zum Metallelement 3 gefördert. Dazu wird das Förderelement genutzt. Der zusätzliche Materialkörper 12 greift mit seinem Kopfbereich 16 in das Metallelement 3 ein, durchstößt dieses aber nicht. Dabei kann die Zuführ- und Haltevorrichtung 7 auch rotieren, wie in Figur 2 mittels des Rotationspfeiles 17 erkennbar ist.

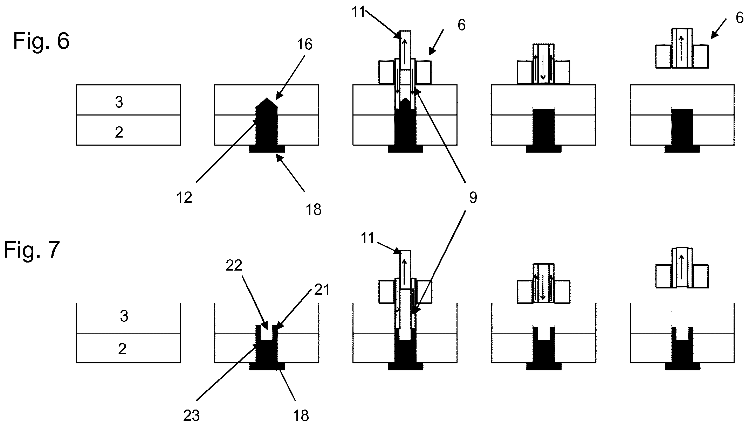

Wie in den Figuren 1 bis 5 erkennbar, weist der zusätzliche Materialkörper 12 an seinem zylindrischen Grundkörper ein Außengewinde auf, so dass die mittels des Nietvorganges hergestellte mechanische Verbindung weiter verstärkt ist. Die Rotation des Zuführ- und Haltevorrichtung 7 kann also eine Schraubbewegung des zusätzlichen Materialkörpers 12 mit seinem Außengewinde bewirken. Natürlich kann der zusätzliche Materialkörper 12 auch gewindefrei sein. Der zusätzliche Materialkörper 12 hat an seinem zum Kopfbereich 16 gegenüberliegenden Ende optional einen Anlageflansch 18 (Figur 6).

Bei dem Herstellen der mechanischen Verbindung des Sandwichelementes 2 zum Metallelement 3 mittels des zusätzlichen Materialkörpers 12 dient die wiederauffüllende Reibrührschweißvorrichtung 6 als Widerlager, und drückt das Metallelement 3 in Richtung zum Sandwichelement 2.

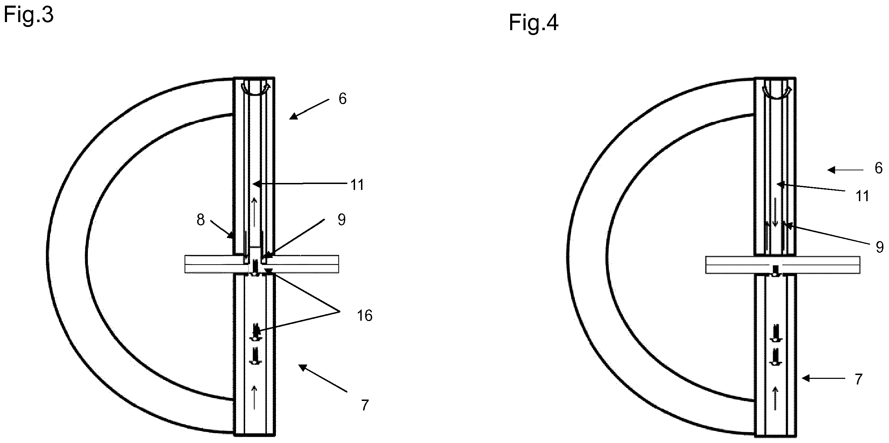

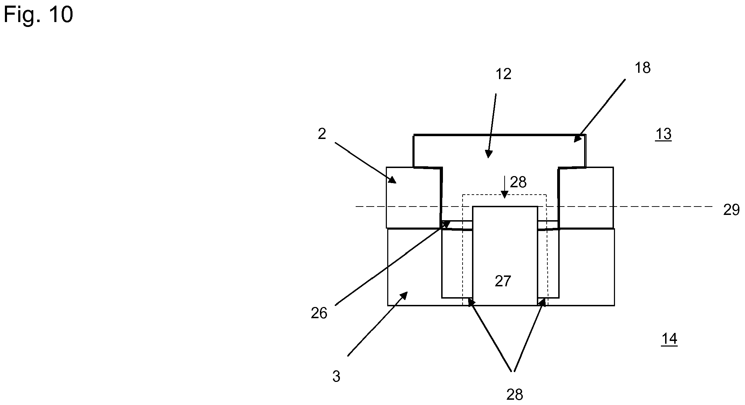

In Figur 3 ist der Schweißprozess, also der widerauffüllende Reibrührschweißprozess in dargestellt. Dabei taucht die Hülse 9 rotierend in das Metallelement 3 ein, wobei der Stift 11 entgegengesetzt dazu zurückbewegt wird. Zuvor wurden sowohl zunächst die Hülse 9 als auch der Stift 11 in das Metallelement 3 eingetaucht. Erst ab einer vorgebbaren Eintauchtiefe, wird der Stift 11 entgegengesetzt bewegt. Dabei wird das Metallelement 3 bereichsweise, aber auch der Kopfbereich 16 des zusätzlichen Materialkörpers 12 plastifiziert. Dies ist in Figur 3 durch den im Vergleich zu Figur 1 und 2 kürzeren zusätzlichen Materialkörper erkennbar. Durch das Plastifizieren werden beide Elemente miteinander stoffschlüssige verbunden. Die Fügeebene ist in Figur 10, auf die noch eingegangen wird, erkennbar. Die Zuführ- und Haltevorrichtung 7 hat die Funktion des Widerlagers und drückt das Sandwichelement 2 in Richtung zum Metallelement 3.

Figur 4 zeigt einen weiteren Schritt des wiederauffüllenden Reibrührschweißprozesses bei welchem der Stift 11 in Richtung zur Oberfläche des Metallelementes 3 bewegt wird, wobei die Hülse 9 dazu entgegengesetzt zurückbewegt wird. So ist das Metallelement 3 an seiner aktiven Seite, also an der Oberfläche, an welcher die wiederauffüllende Reibrührschweißvorrichtung angreift, bzw. einwirkt im Wesentlichen kraterfrei und eben, wie in Figur 5 erkennbar.

Mit der Erfindung wird also eine Hybridverbindung zwischen dem Sandwichelement 2 und dem Metallelement 2 erzeugt, welches eine mechanische Verbindung des zusätzlichen Materialkörpers 12 zum Sandwichelement 2 und zugleich eine stoffschlüssige Verbindung des zusätzlichen Materialkörpers 12 zum Metallelement 3 aufweist.

In den Figuren 6 bis 9 sind von der Zeichnungsebene links bis zur Zeichnungsebene rechts aufeinander folgende Schritte gemäß den Figuren 1 bis 5 prinzipiell dargestellt.

Bei dem in Figur 6 dargestellten Ausführungsbeispiel ist der zusätzliche Materialkörper 12 als Niet ausgeführt, wobei der Kopfbereich 16 spitz zulaufend konusförmig ausgeführt ist. Wie in Figur 6, Mitte erkennbar, taucht die Hülse 9 in das Metallelement 2 ein und rotiert konzentrisch um die konusförmige Spitze 19 des zusätzlichen Materialkörpers 12, so dass diese quasi eingeebnet wird. Die Hülse 9 taucht wie erkennbar nicht bis in den von dem Sandwichelement 2 umfassten zylindrischen Grundkörper ein. Vielmehr wird das Eintauchen beabstandet zur Oberfläche des Sandwichelementes 2 beendet. Die stoffschlüssige Fügeebene des zusätzlichen Materialkörpers 12 zum Metallelement 3 ist innerhalb des Metallelementes 3 angeordnet. Durch die Nietverbindung ist eine mechanische Verbindung des zusätzlichen Materialkörpers 12 um Sandwichelement 2 gebildet. So ist das Sandwichelement 2 mit dem Metallelement 3 verbunden.

Bei dem in Figur 7 dargestellten Ausführungsbeispiel ist der zusätzliche Materialkörper 12 an seinem Kopfbereich 16 im Querschnitt gesehen U-Förmig ausgeführt und weist im Querschnitt gesehen zwei U-Schenkel 21 auf, zwischen denen ein Freiraum 22 ist, der von einer Basis 23 begrenzt ist. Der Freiraum 22 ist natürlich von dem bei dem Eintreiben eindringenden Werkstoff des Metallelementes ausgefüllt, so dass quasi eine zusätzliche mechanische Verbindung erzeugt ist. Die U-Schenkel 21 sind so ausgeführt, dass die Hülse 9 bei dem rotierenden Eintauchen in das Metallelement 2 diese kontaktiert. Die Hülse 9 taucht wie erkennbar nicht bis in den von dem Sandwichelement 2 umfassten zylindrischen Grundkörper ein. Vielmehr wird das Eintauchen beabstandet zur Oberfläche des Sandwichelementes 2, aber auch beabstandet zur Basis 23 beendet. Die stoffschlüssige Fügeebene des zusätzlichen Materialkörpers 12 zum Metallelement 3 ist innerhalb des Metallelementes 3 angeordnet, wobei weiterhin U-Schenkel 21 verbleiben. Durch die Nietverbindung ist eine mechanische Verbindung des zusätzlichen Materialkörpers 12 zum Sandwichelement 2 gebildet. So ist das Sandwichelement 2 mit dem Metallelement 3 verbunden. Die unplastifizierten U-Schenkel 21 sind weiterhin in dem Metallelement 3 aufgenommen und bilden eine weitere mechanische Verbindung allerdings zum Metallelement 3.

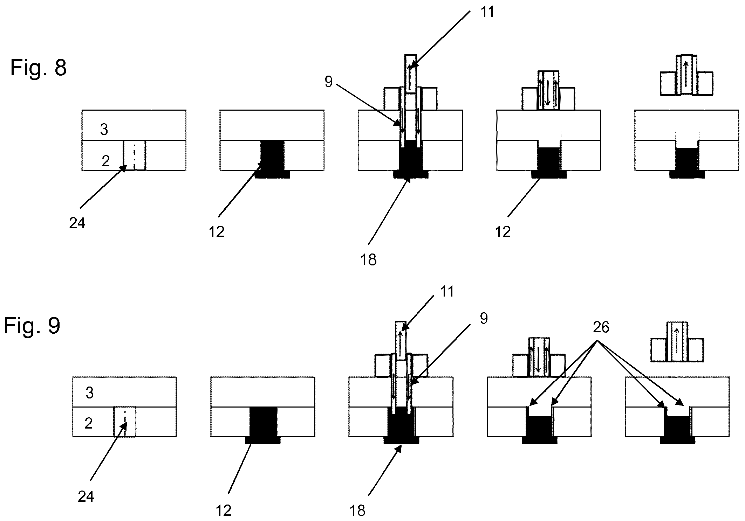

Bei den in den Figuren 6 und 7 dargestellten Ausführungsbeispielen ist der zusätzliche Materialkörper 12 ohne Vorbearbeitung des Sandwichelementes 2 durch dieses hindurch mit seinem Kopfteil 16 in das Metallelement 3 eingreifend eingebracht worden, so dass die Nietverbindung erzeugt ist. Bei den in den Figuren 8 und 9 dargestellten Ausführungsbeispielen dagegen ist das Sandwichelement 2 vorbearbeitet und weist ein Vorloch 24 auf.

Das Vorloch 24 ist von der freien Oberfläche des Sandwichelementes 2 dieses vollständig durchgreifend in Richtung zum Metallelement 3 geführt. In das Vorloch 24 wird der zusätzliche Materialkörper 12 von der Zuführ- und Haltevorrichtung 7 eingepresst und/oder eingeschraubt. Zum Einschrauben kann der zusätzliche Materialkörper 12 wie zu den Figuren 1 bis 5 beschrieben ein Außengewinde aufweisen, wobei auch das Vorloch 24 ein dazu korrespondierende Innengewinde haben kann.

Das Vorloch 24 ist in seinem lichten Durchmesser günstiger Weise kleiner als der Außendurchmesser des zusätzlichen Materialkörpers 12. Der zusätzliche Materialkörper 12 kann also entweder kraftschlüssig unter Presspassung in das Vorloch eingepresst werden oder kraftformschlüssig in das Vorloch 24 eingeschraubt oder eingedreht und eingepresst werden. So ist der zusätzliche Materialkörper 12 lagesicher in dem Sandwichelement 2 gehalten.

Bei dem Ausführungsbeispiel gemäß Figur 8 weist der zusätzliche Materialkörper 12 einen Außendurchmesser auf, welcher dem Außendurchmesser der Hülse 9 entspricht. Die Hülse 9 dringt durch das Metallelement 3 in das in dem Sandwichelement aufgenommenen zusätzlichen Materialkörper 12 ein, so dass der zusätzliche Materialkörper 12, also sein Kopfbereich 16 aber auch das Metallelement 3 in dem betrefflichen Bereich plastifiziert werden. So ist die stoffschlüssige Fügeebene des zusätzlichen Materialkörpers 12 zum Metallelement innerhalb des Sandwichelementes 2 angeordnet, und nicht wie zu den Figuren 6 und 7 beschrieben innerhalb des Metallelementes 3. Gleichwohl liegt auch bei dem Ausführungsbeispiel nach Figur 8 eine Hybridverbindung vor.

Bei dem in Figur 9 erkennbaren Ausführungsbeispiel ist der zusätzliche Materialkörper 12 breiter als die Hülse 9. Wie bei dem Ausführungsbeispiel zu Figur 8 taucht die Hülse 9 in den zusätzlichen Materialkörper 12, also in dessen Kopfbereich 16 ein, wobei jedoch unplastifizierte Stege 26 des Kopfbereiches 16 im Querschnitt gesehen beidseitig des Einwirkbereichs der Hülse 9 verbleiben. Die stoffschlüssige Fügeebene des zusätzlichen Materialkörpers 12 zum Metallelement 3 ist innerhalb des Sandwichelements 2 aber auch innerhalb der verbleibenden Stege 26 angeordnet.

Figur 10 zeigt einen Querschnitt durch die beiden miteinander verbundenen Elemente 2 und 3 sowie durch den zusätzlichen Materialkörper 12.

Das Metallelement 2 ist in der Zeichnungsebene unten angeordnet. Darüber ist das Sandwichelement 2 angeordnet. Der zusätzliche Materialkörper 12 weist an seiner Sandwichseite, also gegenüberliegend zum Kopfbereich 16 den Anlageflansch 24 auf, welcher an dem Sandwichelement 2 anliegt.

In das Metallelement 2 ist die Hülse 9 bis in den zusätzlichen Materialkörper 12, also in dessen Kopfbereich 16 eingetaucht, was mittels der Rührzone 27 dargestellt ist. Die Rührzone 27 erstreckt sich von der freien Oberfläche des Metallelementes 2 durch dieses hindurch, wobei im Querschnitt gesehen links und rechts der Rührzone 27 die Stege 26 erkennbar sind. Die Größenverhältnisse in Figur 10 sind natürlich nicht maßstabsgerecht und können insofern zur gewählten Darstellung der Figur 9 abweichen.

Aufgrund der entstehenden Reibungswärme ist die Rührzone 27 von einer Wärmeeinflusszone 28 umgeben. Wie in Figur 10 erkennbar ist diesen jeweils zum Sandwichelement 2 so beabstandet, dass der thermische Einfluss auf das Sandwichelement 2 vernachlässigbar ist. Insofern werden die Eigenschaften des Sandwichelementes 2 durch die Reibungswärme, welche das Metallelement 3 aber auch den zusätzlichen Materialkörper 12 plastifiziert nicht beeinträchtigt.

Die stoffschlüssige Fügeebene ist in Figur 10 mit dem Bezugszeichen 29 angedeutet. Diese liegt innerhalb des Sandwichelements 3 und innerhalb der verbleibenden Stege 26.

### Bezugszeichenliste

- 1: Vorrichtung
- 2: Sandwichelement
- 3: Metallelement
- 4: Tragarm

- 6: wiederauffüllende Reibrührschweißvorrichtung
- 7: Zuführ- und Haltevorrichtung
- 8: Äußerer Klemmring
- 9: Hülse

- 11: Stift
- 12: Zusätzlicher Materialkörper
- 13: Sandwichelementseite
- 14: Metallelementseite

- 16: Kopfbereich
- 17: Rotationspfeil
- 18: Anlageflansch
- 19: konusförmige Spitze

- 21: U-Schenkel
- 22: Freiraum
- 23: Basis
- 24: Vorloch

- 26: unlpastifizierte Stege
- 27: Rührzone
- 28: Wärmeeinflusszone
- 29: stoffschlüssige Fügeebene

## Patentansprüche

1. Verfahren zum Herstellen einer Verbindung zwischen einem Sandwichelement (2) und einem Metallelement (3), wobei das Sandwichelement (2) eine zwischen zwei Deckelementen angeordnete artfremde Zwischenschicht aufweist, umfassend zumindest die Schritte:
Bereitstellen des Sandwichelementes (2) und des Metallelementes (3), Übereinander Legen des Sandwichelementes und des Metallelementes, so dass diese zumindest bereichsweise überlappen,
wobei das Verfahren durch folgende weitere Schritte gekennzeichnet ist:
Beigeben eines zusätzlichen Materialkörpers (12) von der Sandwichelementseite (13) aus, derart dass der zusätzliche Materialkörper (12) mit seinem Grundkörper vollständig in dem Sandwichelement (12) dieses durchstoßend aufgenommen ist, und
Durchführen eines wiederauffüllenden Reibrührschweißprozesses von der Metallelementseite (14) aus, so dass eine Hybridverbindung gebildet ist, welche eine mechanische Verbindung des zusätzlichen Materialkörpers (12) zum Sandwichelement (2) und eine stoffschlüssige Verbindung des zusätzlichen Materialkörpers (12) zum Metallelement (3) aufweist.

2. Verfahren nach Anspruch 1, **dadurch gekennzeichnet, dass** bei dem wiederauffüllenden Reibrührschweißprozess lediglich das Metallelement (3) zumindest bereichsweise und ein Kopfbereich (16) des zusätzlichen Materialkörpers (16) plastifiziert werden.

3. Verfahren nach einem der vorhergehenden Ansprüche,
**dadurch gekennzeichnet, dass**
der zusätzliche Materialkörper (12) als Niet ausgeführt ist, welcher in das Sandwichelement (2) dieses durchgreifend mit seinem Kopfbereich (16) in das Metallelement (3) eingreifend eingetrieben wird.

4. Verfahren nach einem der vorhergehenden Ansprüche,
**dadurch gekennzeichnet, dass**
in das Sandwichelement (2) ein Vorloch (24) eingebracht wird, in welches der zusätzliche Materialkörper (12) eingebracht wird.

5. Verfahren nach einem der vorhergehenden Ansprüche,
**dadurch gekennzeichnet, dass**
der zusätzliche Materialkörper (12) aus einem zum Metallelement (3) artgleichen Werkstoff gebildet ist.

6. Verfahren nach einem der vorhergehenden Ansprüche,
**gekennzeichnet durch**
eine stoffschlüssige Fügeebene (29) des zusätzlichen Materialkörpers (12) zum Metallelement (2) welche innerhalb des Metallelementes (3) angeordnet ist.

7. Verfahren nach einem der Ansprüche 1 bis 5,
**gekennzeichnet durch**
eine stoffschlüssige Fügeebene (29) des zusätzlichen Materialkörpers (12) zum Metallelement (2) welche innerhalb des Sandwichelementes (2) angeordnet ist.

8. Vorrichtung zum Herstellen einer Verbindung zwischen einem Sandwichelement (2) und einem Metallelement (3), eingerichtet zur Durchführung des Verfahrens nach einem der vorhergehenden Ansprüche, wobei das Sandwichelement (2) eine zwischen zwei Deckelementen angeordnete artfremde Zwischenschicht aufweist, und welche eine wiederauffüllende Reibrührschweißvorrichtung (6) aufweist, die an einem Ende eines Tragarms (4) angeordnet ist, an dessen anderem, gegenüberliegenden Ende eine Zuführ- und Haltevorrichtung (7) für zumindest einen zusätzlichen Materialkörper (12) angeordnet ist, wobei die Vorrichtung derart eingerichtet ist, dass der zusätzliche Materialkörper (12) von der Sandwichelementseite (13) aus in Richtung zum Metallelement (3) in das Sandwichelement (2) eingebracht werden kann, und ein wiederauffüllender Reibrührschweißprozess von der Metallelementseite (14) aus durchgeführt werden kann, so dass eine Hybridverbindung gebildet werden kann, welche eine mechanische Verbindung des zusätzlichen Materialkörpers (12) zum Sandwichelement (2) und eine stoffschlüssige Verbindung des zusätzlichen Materialkörpers (12) zum Metallelement (3) aufweist.

9. Karosseriebauteil für ein Fahrzeug hergestellt mit einem Verfahren nach einem der Ansprüche 1 bis 7, wobei ein Metallelement (3) mit einem Sandwichelement (2) verbunden ist, wobei ein zusätzlicher Materialkörper (12) jeweils bereichsweise mechanisch mit dem Sandwichelement (2) und stoffschlüssig mit dem Metallelement (3) verbunden ist.

## Claims

1. Method for producing a connection between a sandwich element (2) and a metal element (3), wherein the sandwich element (2) has a dissimilar interlayer arranged between two cover elements, comprising at least the steps:
providing the sandwich element (2) and the metal element (3);
placing the sandwich element and the metal element on top of one another so that they overlap at least in some regions;
wherein the method is **characterized by** the following further steps:
adding an additional material body (12) from the sandwich-element side (13), such that the additional material body (12) is received with its base body entirely in the sandwich element (12) so as to break through the latter; and
carrying out a refill friction stir welding process from the metal-element side (14) so that a hybrid connection is formed, which has a mechanical connection between the additional material body (12) and the sandwich element (2) and a material-locking connection between the additional material body (12) and the metal element (3).

2. Method according to Claim 1, **characterized in that** only the metal element (3), at least in some regions, and a head region (16) of the additional material body (16) are plasticized in the refill friction stir welding process.

3. Method according to either of the preceding claims, **characterized in that**
the additional material body (12) is constructed as a rivet which is driven into the sandwich element (2) such that it reaches through this, with its head region (16) reaching into the metal element (3).

4. Method according to one of the preceding claims, **characterized in that**
a pre-punched hole (24), into which the additional material body (12) is introduced, is introduced into the sandwich element (2) .

5. Method according to one of the preceding claims, **characterized in that**
the additional material body (12) is formed from a similar material to the metal element (3).

6. Method according to one of the preceding claims, **characterized by**
a material-locking joining plane (29) of the additional material body (12) and the metal element (2), which is arranged within the metal element (3).

7. Method according to one of Claims 1 to 5, **characterized by**
a material-locking joining plane (29) of the additional material body (12) and the metal element (2), which is arranged within the sandwich element (2) .

8. Device for producing a connection between a sandwich element (2) and a metal element (3), designed for carrying out the method according to one of the preceding claims, wherein the sandwich element (2) has a dissimilar interlayer arranged between two cover elements, and which has a refill friction stir welding device (6) which is arranged at one end of a supporting arm (4), at the other, opposite end of which a supply and holding device (7) for at least one additional material body (12) is arranged, wherein the device is designed in such a way that the additional material body (12) can be introduced into the sandwich element (2) from the sandwich-element side (13) in the direction of the metal element (3), and a refill friction stir welding process can be carried out from the metal-element side (14) so that a hybrid connection can be formed, which has a mechanical connection between the additional material body (12) and the sandwich element (2) and a material-locking connection between the additional material body (12) and the metal element (3).

9. Vehicle body component for a vehicle produced by a method according to one of Claims 1 to 7, wherein a metal element (3) is connected to a sandwich element (2), wherein an additional material body (12) is connected mechanically to the sandwich element (2) and with material locking to the metal element (3) in some regions in each case.

## Revendications

1. Procédé de réalisation d'une liaison entre un élément en sandwich (2) et un élément métallique (3), l'élément en sandwich (2) présentant une couche intermédiaire de nature différente disposée entre deux éléments de recouvrement, le procédé comportant au moins les étapes qui consistent à :
prévoir un élément en sandwich (2) et l'élément métallique (3),
superposer l'élément en sandwich et l'élément métallique de telle sorte qu'ils se recouvrent au moins en partie,
le procédé étant **caractérisé par** les autres étapes cidessous :
ajouter un corps supplémentaire (12) depuis le côté (13) de l'élément en sandwich de telle sorte que le corps de base du corps supplémentaire (12) soit complètement repris dans l'élément en sandwich (12) et traverse ce dernier et
exécuter une opération de soudage par contact de frottement de remplissage à partir du côté (14) de l'élément métallique de manière à former une liaison hybride qui présente une liaison mécanique du corps supplémentaire (12) à l'élément en sandwich (2) et une liaison en correspondance de matière du corps supplémentaire (12) à l'élément métallique (3).

2. Procédé selon la revendication 1, **caractérisé en ce que** lors de l'opération de soudage par contact de frottement de remplissage, seules certaines parties de l'élément métallique (3) et une partie de tête (16) du corps supplémentaire (16) sont plastifiées.

3. Procédé selon l'une des revendications précédentes, **caractérisé en ce que** le corps supplémentaire (12) est configuré comme rivet qui est enfoncé dans l'élément en sandwich (2) et dont la partie de tête (16) traverse ce dernier pour s'engager dans l'élément métallique (3).

4. Procédé selon l'une des revendications précédentes, **caractérisé en ce qu'**un pré-trou (24) dans lequel le corps supplémentaire (12) est inséré est ménagé dans l'élément en sandwich (2).

5. Procédé selon l'une des revendications précédentes, **caractérisé en ce que** le corps supplémentaire (12) est formé d'un matériau de nature identique à celui de l'élément métallique (3).

6. Procédé selon l'une des revendications précédentes, **caractérisé par** un plan (29) de jonction en correspondance de matière du corps supplémentaire (12) à l'élément métallique (2), ce plan étant disposé à l'intérieur de l'élément métallique (3).

7. Procédé selon l'une des revendications 1 à 5, **caractérisé par** un plan (29) de jonction en correspondance de matière du corps supplémentaire (12) à l'élément métallique (2), ce plan étant disposé à l'intérieur de l'élément en sandwich (2).

8. Ensemble de réalisation d'une liaison entre un élément en sandwich (2) et un élément métallique (3), conçu pour mettre en oeuvre le procédé selon l'une des revendications précédentes, et dans lequel l'élément en sandwich (2) présente une couche intermédiaire de nature différente disposée entre deux éléments de recouvrement, et présentant un ensemble (6) de soudage par contact de frottement de remplissage disposé à une extrémité d'un bras de support (4) à l'autre extrémité opposée duquel est disposé un ensemble (7) d'amenée et de maintien d'au moins un corps supplémentaire (12),
l'ensemble étant conçu de telle sorte que le corps supplémentaire (12) puisse être inséré dans l'élément en sandwich (2) en direction de l'élément métallique (3) depuis le côté (13) de l'élément en sandwich et qu'une opération de soudage par contact de frottement de remplissage puisse être exécutée depuis le côté (14) de l'élément métallique de sorte que puisse être formée une liaison hybride qui présente une liaison mécanique du corps supplémentaire (12) à l'élément en sandwich (2) et une liaison en correspondance de matière du corps supplémentaire (12) à l'élément métallique (3).

9. Composant de carrosserie de véhicule, fabriqué en recourant à un procédé selon l'une des revendications 1 à 7, et dans lequel un élément métallique (3) est relié à un élément en sandwich (2), certaines parties d'un corps supplémentaire (12) étant reliées mécaniquement à l'élément en sandwich (2) et d'autres en correspondance de matière à l'élément métallique (3).
